# EUROPEAN PATENT APPLICATION

(11) **EP 3 591 825 A1**
(43) Date of publication of application: **08.01.2020**
(21) Application number: 18181532.5
(22) Date of filing: 03.07.2018
(51) Int. Cl.: H02M 3/335, H02M 1/34

(54) **HYBRID FLYBACK CONVERTER**

(71) Applicant: ABB Schweiz AG, 5400 Baden (CH)
(72) Inventor: Park, Ki-Bum, 8442 Fislisbach (CH); Soeiro, Thiago-Batista, 2636 Schipluiden (NL); Canales, Francisco, 5405 Baden-Dättwil (CH)
(74) Representative: Qip Patentanwälte Dr. Kuehn & Partner mbB

(57) **Abstract**

An electrical converter (20) comprises a transformer (24) with a primary side (26) and a secondary side (28); a DC link connection (22); a first semiconductor switch (Q₁) and a second semiconductor switch (Q₂), which are connected in series with the primary side (26) of the transformer (24), which series connection is connected in parallel with the DC link connection (22); a first diode (d_{c1}) connected in series with the first semiconductor switch (Q₁) and connected to the DC link connection (22), such that the first diode (d_{c1}) and the first semiconductor switch (Q₁) are connected in parallel with the DC link connection (22); and a snubber circuit (30) with a snubber capacitor (Cₛₙ) connected in parallel to the second semiconductor switch (Q₂), which snubber circuit (30) comprises a second diode (d_{c2}) connected in series with the snubber capacitor (Cₛₙ).

## Description

### FIELD OF THE INVENTION

The invention relates to an electrical converter and to a circuit board system.

### BACKGROUND OF THE INVENTION

For photovoltaic applications, a photovoltaic inverter may interconnect a photovoltaic panel via a DC link with an electrical grid. In these applications, also an auxiliary power supply may be present, which may be connected to the DC link and which may be used to feed the power for a cooling fan, gate drivers, a controller, electronics, etc.

Often, a single-switch flyback converter is used as auxiliary power supply with DC links with about less than 1 kV. These voltage ranges may be covered by low voltage drives, universal power supplies, photovoltaic converters, etc., because of its simple structure and low cost.

In a single switch flyback converter, a switch is connected in series with a primary side of a transformer, wherein the point between the transformer and the switch is connected via a snubber circuit with a positive side of the DC link. In a single switch flyback converter, the voltage stress of the switch is the sum of the input voltage across the DC link and the snubber voltage. Since the switch voltage stress is always higher than the DC link voltage, 1.5 kV Si-MOSFET have been widely used for converters with a DC link voltage of 1 kV.

For photovoltaic panels with higher voltages, such as 1.5 kV, the overall system costs may be deceased. In this case, the DC link voltage of the photovoltaic inverter may reach 1.5 kV and auxiliary power supplies for 1.5 kV DC links may be required.

For higher voltages, a two-switch flyback converter may be used, which comprises two switches connected in series with a primary side of a transformer connected between them. A lower leg of the upper switch is connected via a diode with the negative side of the DC link and an upper leg of the lower switch is connected via a further diode with the positive side of the DC link. In a two-switch flyback converter, the voltage stress of each switch is clamped to DC link voltage. For 1.5 kV applications, 1.7 kV SiC MOSFET may be suited switches, however may result in high costs.

### DESCRIPTION OF THE INVENTION

It is an objective of the invention to provide a simple low-cost converter, which may be used in auxiliary power supply applications.

This objective is achieved by the subject-matter of the independent claims. Further exemplary embodiments are evident from the dependent claims and the following description.

A first aspect of the invention relates to an electrical converter. The electrical converter may be adapted for converting a DC input voltage into a DC output voltage or an AC output voltage. The electrical converter may be adapted for processing an input voltage of more than 500 V. The electrical converter may be used as auxiliary power supply for a power converter and/or may be connected to the DC link of the power converter.

According to an embodiment of the invention, the electrical converter comprises a transformer with a primary side and a secondary side; a DC link connection; a first semiconductor switch and a second semiconductor switch, which are connected in series with the primary side of the transformer, which series connection is connected in parallel with the DC link connection; a first diode connected in series with the first semiconductor switch and connected to the DC link connection, such that the first diode and the first semiconductor switch are connected in parallel with the DC link connection; and a snubber circuit with a snubber capacitor connected in parallel to the second semiconductor switch, which snubber circuit comprises a second diode connected in series with the snubber capacitor.

The primary side of the transformer may comprise a primary winding. The secondary side of the transformer may comprise a secondary winding.

The DC link connection may be connected to a DC link of a further converter, such as the power converter mentioned above. However, it also may be possible that the DC link connected is and/or is connected to a DC link of the electrical converter.

The first and second semiconductor switches may be equally designed. However, the second semiconductor switch may have a lower voltage rating as the first semiconductor switch. These switches are connected in series with the primary side of the transformer, for example on either side of the primary side or on the same side.

The converter may be operated by switching the first and second semiconductor switch on and off simultaneously. During the on state, i.e. when both semiconductor switches are switched on, the primary side current flows through the semiconductor switches. During the off state, i.e. when both switches are switched off, the primary side current flows through the first diode, the snubber circuit and the second diode. Therefore, the voltage stress of the first semiconductor switch is clamped by the DC link voltage through the first diode and the voltage stress of the second semiconductor switch is clamped by the voltage of the snubber capacitor through the second diode. Since the snubber capacitor voltage may be selected to a lower voltage value as the DC link voltage, a second semiconductor switch with lower voltage-rating as the first semiconductor switch may be used.

In such a way, compared to a one single switch flyback converter, a higher voltage stress caused by the DC link may be handled. Only an additional semiconductor switch, which may have a lower voltage rating, and the second diode may have to be added. As the electrical converter has two switches connected with a transformer and a snubber circuit, it may be seen as a hybrid two-switch flyback converter.

The second diode may be seen as a clamping diode and/or may have a smaller voltage rating as the first diode.

There are several possibilities, how the components mentioned above may be interconnected with each other to form a functioning converter.

According to an embodiment of the invention, the primary side of the transformer is connected between the first semiconductor switch and the second semiconductor switch. In other words, the first semiconductor switch, the primary side and the second semiconductor switch may be connected in series with each other in this direction. Therewith, the first semiconductor switch may be connected to the positive side of the DC link connection and the second semiconductor switch may be connected to the negative side of the DC link connection, and vice versa.

According to an embodiment of the invention, the first semiconductor switch and the second semiconductor switch are directly connected. In this case, the first semiconductor switch and the second semiconductor switch may be provided together on the same side of the primary side.

According to an embodiment of the invention, the primary side of the transformer is connected to a positive side of the DC link connection or to a negative side of the DC link connection. One or both of the semiconductor switches may be connected to the positive side of the DC link connection. Alternatively, one or both of the semiconductor switches may be connected to the negative side of the DC link connection.

According to an embodiment of the invention, the first semiconductor switch is connected to the positive side of the DC link connection.

According to an embodiment of the invention, the second semiconductor switch is connected to the negative side of the DC link connection.

According to an embodiment of the invention, the snubber circuit comprises a snubber resistor connected in parallel with the snubber capacitor. Both the snubber resistor and the snubber capacitor may be connected in series with the second diode.

According to an embodiment of the invention, the first diode is connected in anti-series with the first semiconductor switch. A conduction direction of the first diode may be opposite to a conduction direction of the first semiconductor switch in the on state and/or conducting state.

According to an embodiment of the invention, the second diode, for example together with the snubber capacitor, is connected in parallel with the second semiconductor switch. The conduction direction of the second diode may be parallel to the conduction direction of the second semiconductor switch in the on state and/or conducting state.

According to an embodiment of the invention, the second diode is connected to the primary side of the transformer. This may be the case, when the primary side of the transformer is connected between the two semiconductor switches.

According to an embodiment of the invention, the second diode is connected between the first semiconductor switch and the second semiconductor switch. This may be the case, when the first and second semiconductor switch are directly connected in series with each other.

According to an embodiment of the invention, the second diode is connected between the primary side of the transformer and the snubber capacitor. The second diode is connected to the leg/the side of the primary side of the transformer, which is connected with the second semiconductor switch.

According to an embodiment of the invention, the first semiconductor switch has a higher voltage rating as the second semiconductor switch. The voltage rating of the first semiconductor switch may be as high, such that it can withstand the voltage stress from the DC link connection. The voltage rating of the second semiconductor switch may be as high to withstand the voltage stress caused by the snubber capacitor. The voltage rating of the snubber capacitor may be chosen much lower than the one of the DC link connection.

For example, the voltage rating of the first semiconductor switch may be at least twice as high as the one of the second semiconductor switch. Specific examples may be a 1.7 kV rating for the first semiconductor switch and/or a 600 V voltage rating for the second semiconductor switch.

According to an embodiment of the invention, the first semiconductor switch comprises a SiC semiconductor switch and/or the second semiconductor switch comprises a Si semiconductor switch. A SiC semiconductor switch, such as a SiC MOSFET, may have a larger voltage rating as a Si semiconductor switch, such as a Si MOSFET, which also may be much cheaper.

According to an embodiment of the invention, the first and/or second semiconductor switch comprises an anti-parallel free-wheeling diode. The direction of the free-wheeling diode may define a blocking direction of the respective semiconductor switch, which blocking direction is parallel to the free-wheeling diode.

According to an embodiment of the invention, the DC link connection is connected to a DC link capacitor. The DC link capacitor may be a component of the electrical converter or may be provided by a DC link of a power converter. The electrical converter may be used as auxiliary converter for the power converter.

In general, the electrical converter may be a DC-to-DC converter or a DC-to-AC converter. This may depend on the design of the converter at the secondary side of the transformer.

According to an embodiment of the invention, the secondary side of the transformer is connected in parallel with a second DC link capacitor and/or the secondary side of the transformer is connected in series with a diode. With the second DC link capacitor, a varying positive voltage from the secondary side of the transformer may be equalized to a substantially constant DC voltage. With the secondary side diode, negative voltage spikes may be suppressed.

According to an embodiment of the invention, the secondary side of the transformer is connected with a secondary side converter adapted for generating an AC output voltage. With the secondary side converter, a varying positive voltage from the secondary side of the transformer may be converted in the AC output voltage of the electrical converter.

According to an embodiment of the invention, the secondary side converter comprises two half-bridges connected in parallel with the secondary side of the transformer. The secondary side converter may be a bridge converter.

According to an embodiment of the invention, the secondary side of the transformer comprises two secondary side windings, each of which is connected via a respective semiconductor switch of the secondary side converter in parallel with each other. The secondary side of the transformer may comprise a tapped winding, which provides two voltages, each of which may be converted into a positive and negative half-wave of the AC output voltage.

The two secondary windings may be connected anti-parallel to each other with an AC output of the electrical converter. Each of the windings and the respective semiconductor switch may be connected in series with a diode.

A further aspect of the invention relates to a circuit board system. The circuit board system may be seen as a construction system, which allows to construct hybrid two-switch flyback converters and single switch flyback converters with one equally designed circuit board.

According to an embodiment of the invention, the circuit board system comprises a plurality of equally designed circuit boards, wherein each circuit board comprises a transformer, a DC link connection, a first semiconductor switch, a first diode and a snubber circuit. These circuit boards may be seen as the basis on which both types of converters may be assembled.

In a first case, first circuit boards may be provided with a second semiconductor switch and a second diode, such that an electrical converter according to one of the previous claims is formed. For example, each circuit board may comprise slots, which are already interconnected with the other components mentioned above, such that when the second semiconductor switch and the second diode are mounted to the circuit board, the hybrid two-switch flyback converter is formed.

In a second case, in second circuit boards, a midpoint between the first semiconductor switch and the transformer is interconnected via the snubber circuit to the DC link connection, to form a single switch converter. In this case, the slots for the second semiconductor switch and the second diode may be left empty, but specific points of the circuit board may be connected with each other to form the single switch flyback converter.

A further aspect of the invention relates to a method for manufacturing a hybrid two-switch flyback converter and single switch flyback converters from one type of circuit board, for example as described with respect to the circuit board system.

In summary, the electrical converter as described herein may be provided with a SiC semiconductor switch and a Si semiconductor switch, such that a Si-SiC hybrid two-switch flyback converter is formed. A high-voltage SiC MOSFET and a low-voltage Si MOSFET may be combined into a simple structure. For example, a 1.7 kV SiC-MOSFET and a 600 V Si MOSFET may be used. This may lower semiconductor costs. A low cost and high performance implementation of an auxiliary power supply may be enabled, for example for a 1.5 kV DC link application. In addition, when using the circuit board system, the same design applicable for a 1.5 kV DC link may also be used for a 1 kV DC link with small modifications. This also may lower manufacturing costs.

These and other aspects of the invention will be apparent from and elucidated with reference to the embodiments described hereinafter.

### BRIEF DESCRIPTION OF THE DRAWINGS

The subject-matter of the invention will be explained in more detail in the following text with reference to exemplary embodiments which are illustrated in the attached drawings.
Fig. 1 schematically shows a photovoltaic system with an auxiliary power supply comprising an electrical converter according to an embodiment of the invention.
Fig. 2A shows a circuit diagram for an electrical converter according to an embodiment of the invention.
Fig. 2B shows the circuit diagram of Fig. 2A with a further switching state.
Fig. 3 shows a diagram with voltages and currents in the converter of Fig. 2A and 2B.
Fig. 4 shows a circuit diagram for a secondary side of an electrical converter according to a further embodiment of the invention.
Fig. 5 shows a circuit diagram for a secondary side of an electrical converter according to a further embodiment of the invention.
Fig. 6 shows a part of a circuit board system according to an embodiment of the invention.
Fig. 7 shows a circuit diagram for an electrical converter according to a further embodiment of the invention.
Fig. 8 shows a circuit diagram for an electrical converter according to a further embodiment of the invention.
Fig. 9 shows a circuit diagram for an electrical converter according to a further embodiment of the invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

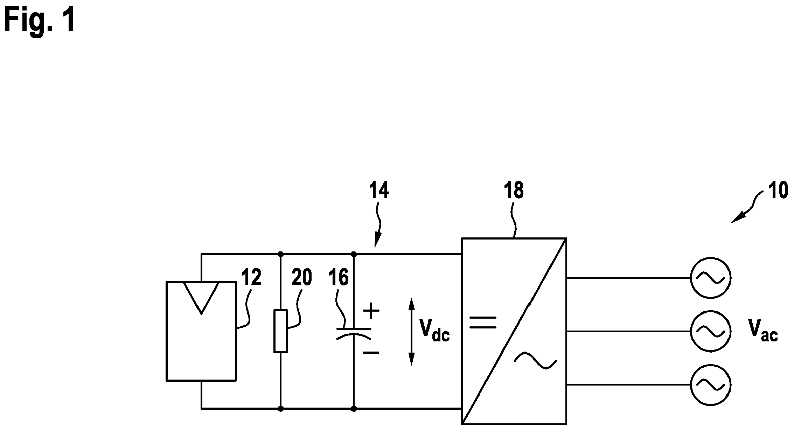

Fig. 1 shows a photovoltaic system 10, which comprises a photovoltaic panel 12, a DC link 14 with a DC link capacitor 16 and a power converter 18. The DC voltage V_{dc} from the photovoltaic panel, such as 1 kV or 1.5 kV, is supplied to the DC link 14, which assumes the same voltage. The power converter 18 converts then the DC voltage V_{dc} into a three-phase AC voltage V_{ac}, which may be supplied to an electrical grid.

A further electrical converter 20 is connected in parallel to the DC link 14, which electrical converter 20 is used as auxiliary power supply for the photovoltaic system 10. The electrical converter 20 is fed by the DC voltage of the DC link 14 and/or may supply a fan, a controller, a gate driver, etc.

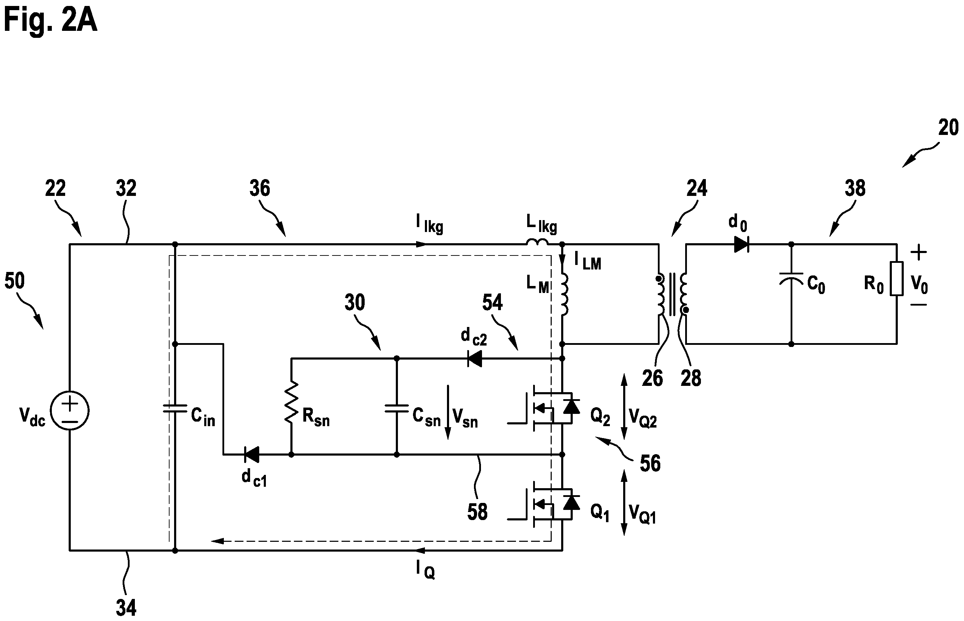

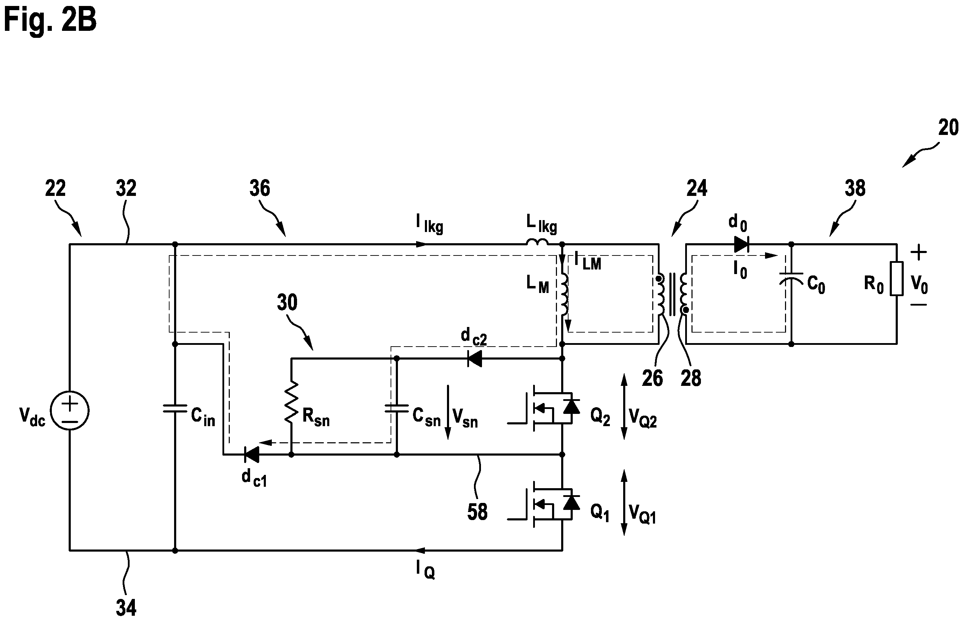

Fig. 2A and Fig. 2B show a circuit diagram for the electrical converter 20. It has to be noted that the electrical converter 20 also may be used in other types of applications, for example, as universal power supply, auxiliary power supply for other types pf power converters, etc.

The electrical converter 20 comprises a DC link connection 22 and a transformer 24 with a primary side 26 and a secondary side 28. The primary side 26 is connected in series with a first semiconductor switch Q₁ and a second semiconductor switch Q₂. The series connection of the two switches and the primary side is connected in parallel with the DC link connection 22.

For the primary side of the transformer 24, which is depicted as ideal transformer, the inductance L_{M} of the primary side of the transformer 24 is shown. It has to be understood that the inductance L_{M} is usually provided by the primary side winding of the transformer 24. Also, a leakage inductance L_{lkg} of the primary side of the electrical converter 20 is shown.

Both semiconductor switches Q₁, Q₂ may comprise a MOSFET with an anti-parallel free-wheeling diode as switching element. As the voltage rating of the second semiconductor switch Q₂ may be much lower than the one of the first semiconductor switch Q₁, this also applies to the switching elements and the free-wheeling diodes. For example, the switching element of the first semiconductor switch Q₁ may be a SiC MOSFET with a voltage rating of, for example, 1.7 kV. The switching element of the second semiconductor switch Q₂ may be a Si MOSFET with a voltage rating of, for example, 600 V.

The DC link connection 22 is connected with a DC voltage source, such as the DC link 14 of a power converter 18. The DC voltage source provides the DC voltage V_{dc}. It may be that the electrical converter 20 has a DC link capacitor Cᵢₙ of its own.

Furthermore, the electrical converter 20 comprises a first diode d_{c1} and a snubber circuit 30, which comprises a second diode d_{c2}.

The DC link connection 22 provides a positive side 32 and a negative side 34. The first diode is connected in series with the first semiconductor switch Q₁ and connected to the positive side 32 of the DC link connection 22, such that the first diode d_{c1} and the first semiconductor switch Q₁ are connected in parallel with the DC link connection 22. Below further embodiments will be provided, which shows that it is also possible that the first diode d_{c1} is connected to the negative side of the DC link connection 22.

The snubber circuit 30 comprises the second diode d_{c2}, a snubber capacitor Cₛₙ and a snubber resistor Rₛₙ, which is connected in parallel to the snubber capacitor Cₛₙ. The snubber capacitor Cₛₙ and the snubber resistor Rₛₙ are connected in series with the second diode d_{c2}.

The snubber circuit 30 is connected in parallel to the second semiconductor switch Q₂.

Both semiconductor switches Q₁, Q₂ have the same conduction direction. The conduction direction of the first diode is in anti-series to the first semiconductor switch Q₁. The conduction direction of the second diode d_{c2} is anti-parallel to the conduction direction of the second semiconductor switch Q₂.

The components galvanically connected to the primary side 26 of the transformer 24 may be seen as primary side 36 of the electrical converter 20, while the components galvanically connected to the secondary side 28 of the transformer 24 may be seen as secondary side 38 of the electrical converter 20.

In the embodiment shown in Fig. 2A and Fig. 2B, the secondary side 38 comprises a diode d₀ connected in series with the secondary side 28 of the transformer 24 and a secondary side DC link capacitor C₀ connected in parallel with the secondary side 28 of the transformer 24. A load connected in parallel to the DC link capacitor C₀ is shown as resistance R₀. With these components, the electrical converter 20 may operate as DC-to-DC converter providing a DC output voltage V₀.

For operating the electrical converter 20, the semiconductor switches Q₁ and Q₂ are simultaneously switched on and off. Fig. 2A and 2B show the primary side current I_{lkg}, the switch current I_{Q}, the transformer primary side current I_{LM} and the transformer secondary side current I₀ during the on-state (Fig. 2A) and the off-state (Fig. 2B).

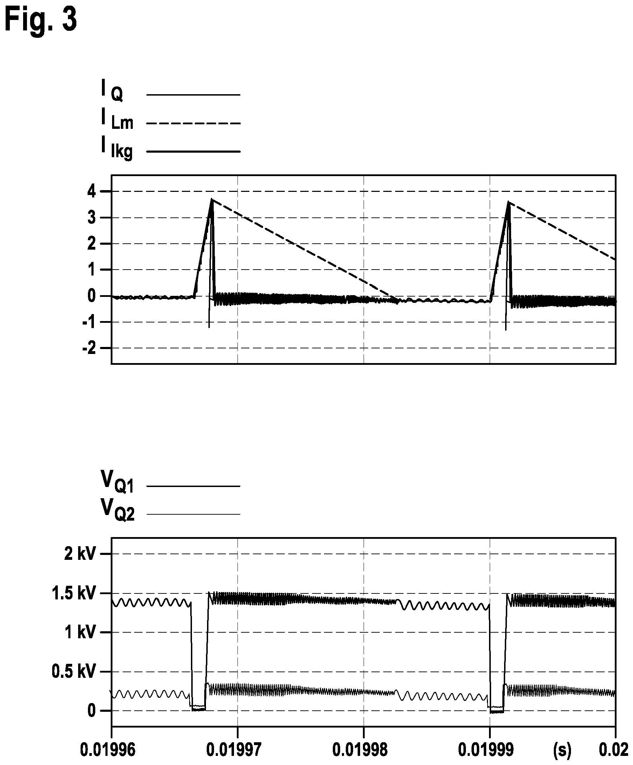

Waveforms of these quantities are shown in Fig. 3, which are depicted against time in s to the right. It can be seen that the on-state may be much shorter as the off-state.

During the off-state shown in Fig. 2B, the primary side current I_{lkg} flows through the first diode d_{c1} and the second diode d_{c2} and the snubber capacitor Cₛₙ. Therefore, the switch voltage stress V_{Q1} of the first semiconductor switch Q₁ is clamped by V_{dc} through the first diode d_{c1}. The switch voltage stress V_{Q2} of the second semiconductor switch Q₂ is clamped by the snubber voltage Vₛₙ provided by the snubber capacitor Cₛₙ through the second diode d_{c2}. Since the snubber voltage Vₛₙ can be selected to a low voltage value, low voltage-rated devices may be used for the second semiconductor switch Q₂, such as a Si-MOSFET and/or a Si diode.

Compared to a two-switch flyback converter, less expensive components may be used. In the case of a two-switch converter, two pairs of 1.7 kV SiC MOSFET and 1.7 kV Si diode may be required. On the other hand, for the converter 20, one pair of 1.7 kV SiC MOSFET and 1.7 kV Si diode may be substituted to one pair of a 600 V Si MOSFET and a 600 V Si diode. It has to be noted that even lower than 600 V devices may be used for the electrical converter 20.

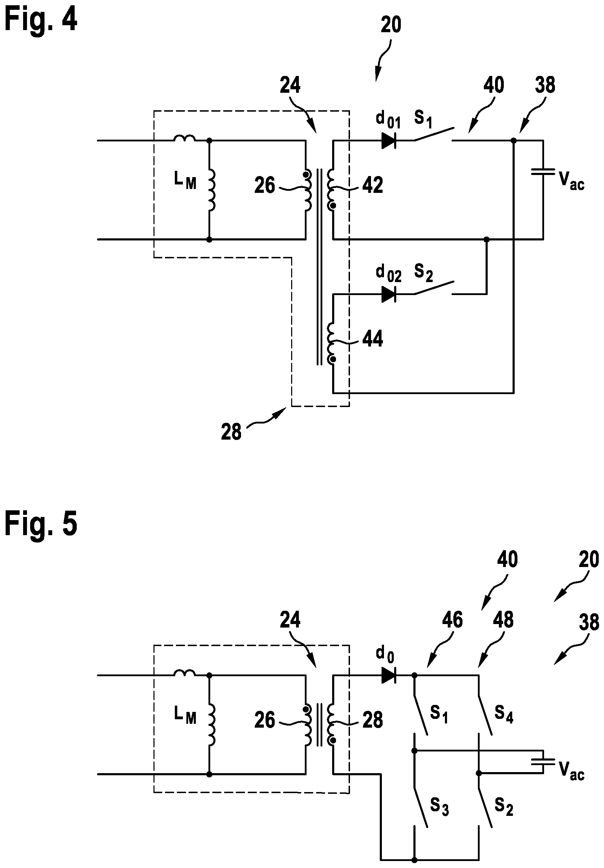

While the embodiment of the electrical converter 20 of Fig. 2A and 2B is a DC-to-DC converter, the electrical converter 20 also may be designed as DC-to-AC converter, as shown in Fig. 4 and 5. This may be achieved with a secondary side converter 40.

Fig. 4 shows a circuit diagram for a secondary side 38 of the electrical converter 20, which comprises a secondary side converter 40 with two switches S1 and S2 which are connected via a respective diode d₀₁, d₀₂ with two winding parts 42, 44 of a center-tapped secondary side 38 of the transformer 24. Via the switches S1, S2, the winding parts 42, 44 may be connected parallel and anti-parallel to an AC output, which then may provide an AC output voltage V_{ac}.

Fig. 5 shows a secondary side 38 of the electrical converter 20, which comprises a secondary side converter 40 with two half-bridges 46, 48, each of which is connected in parallel with the secondary side 28 of the transformer 24 and each of which comprises two series-connected switches S1, S3 (S4, S2). Midpoints of the two half-bridges 46, 48 also may provide an AC output voltage V_{ac}.

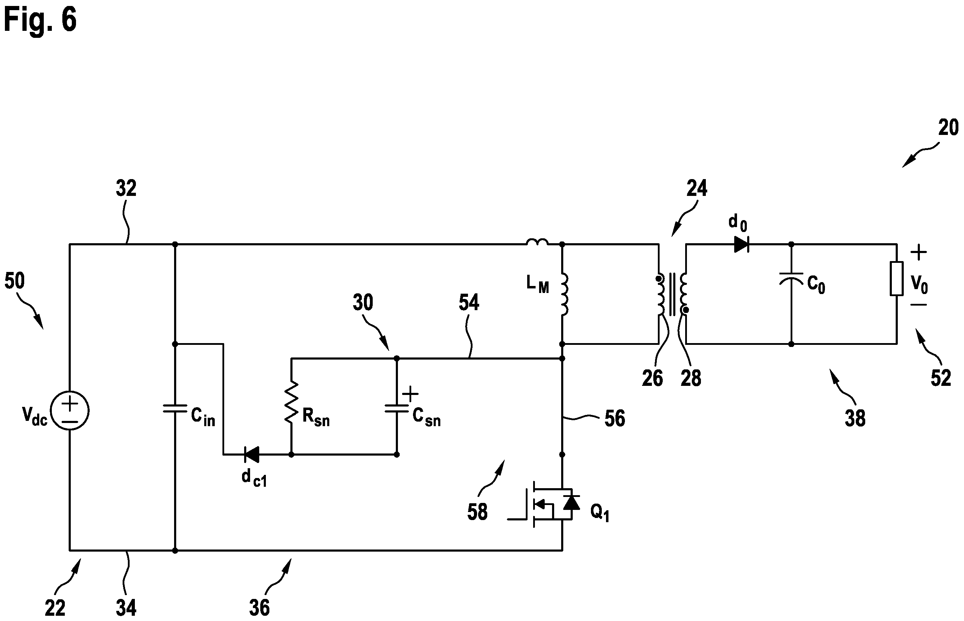

Fig. 6 in combination with Fig. 2A shows a circuit board system 50. Fig. 6 shows a single-switch flyback converter 52, which comprises the same components as the hybrid two-switch flyback converter, for example shown in Fig. 2A, except the second diode d_{c2} and the second semiconductor switch Q₂.

Some or all of the components shown in Fig. 2A and Fig. 6 may be mounted to the same type of circuit board. This circuit board may comprise a first slot 54 and second slot 56, where the second diode d_{c2} and the second semiconductor switch Q₂ may be mounted. Furthermore, a third slot 58 for connecting the second diode d_{c1} with the first semiconductor switch may be present.

In the case of Fig. 2A, the second diode d_{c2} and the second semiconductor switch Q₂ may be mounted in the respective slots 54, 56, while in the case of Fig. 6, the slots 54, 56 may be bridged. Additionally, in the case of Fig. 2A, the slot 58 may be bridged, while in the case of Fig. 6, the slot 58 may remain empty.

Thus, the design of the electrical converter 20 designed for a 1.5 kV DC link may also be used for a 1 kV DC link with small modification. The same circuit board may be used for both applications.

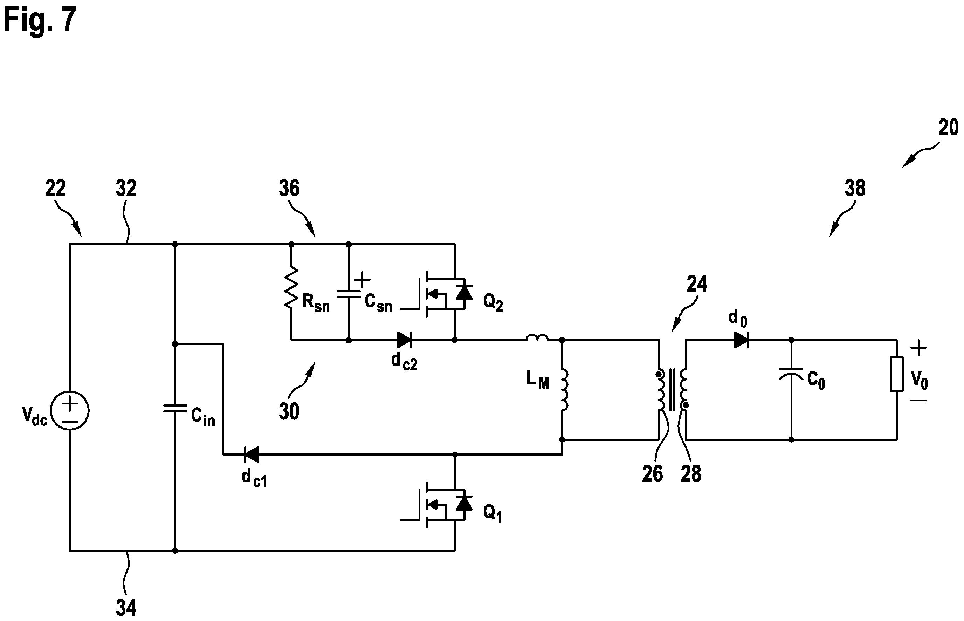

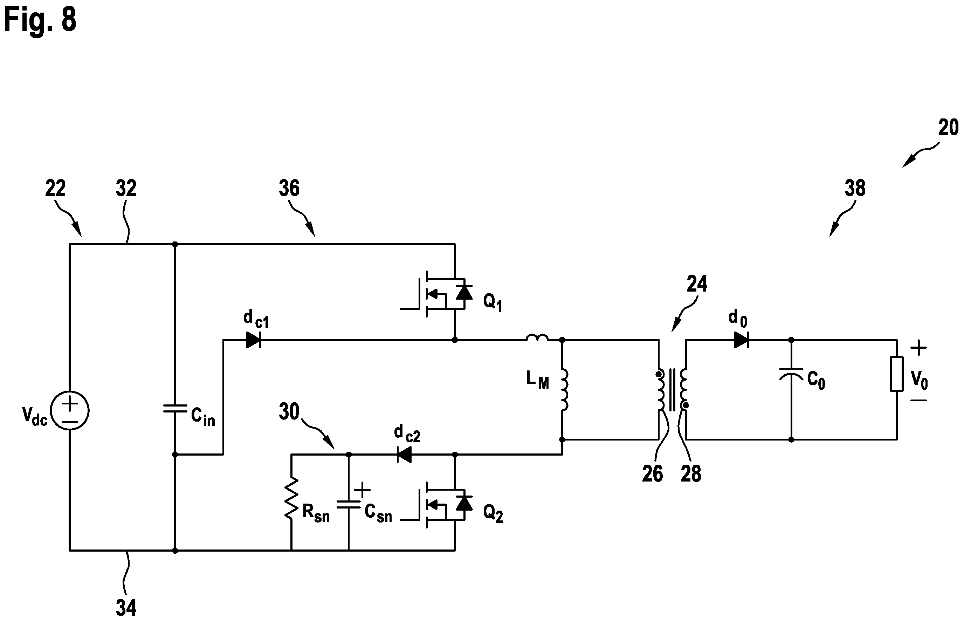

Fig. 7, 8 and 9 show further embodiments for an electrical converter 20 with different primary sides 36. In these embodiments, the same components as described above may be used with the same voltage/current stress. Furthermore, also these embodiments may be combined with secondary sides 38 as shown in Fig. 4 and 5.

In Fig. 7, the primary side 26 of the transformer 24 is connected between the first semiconductor switch Q₁ and the second semiconductor switch Q₂. The first semiconductor switch Q₁ is connected to the negative side 34 of the DC link connecting 22 and the second semiconductor switch Q₂ is connected to the positive side 32 of the DC link connection 22. The first diode d_{c1} interconnects an upper leg of the first semiconductor switch Q₁ with the positive side 32 of the DC link connection 22. The snubber circuit 30 interconnects a lower leg of the second semiconductor switch Q₂ with the positive side 32 of the DC link connection 22.

In Fig. 7, the primary side 26 of the transformer 24 is also connected between the first semiconductor switch Q₁ and the second semiconductor switch Q₂. However, the first semiconductor switch Q₁ is connected to the positive side 32 of the DC link connecting 22 and the second semiconductor switch Q₂ is connected to the negative side 34 of the DC link connecting 22. The first diode d_{c1} interconnects a lower leg of the first semiconductor switch Q₁ with the negative side 34 of the DC link connection 22. The snubber circuit 30 interconnects an upper leg of the second semiconductor switch Q₂ with the negative side 34 of the DC link connection 22.

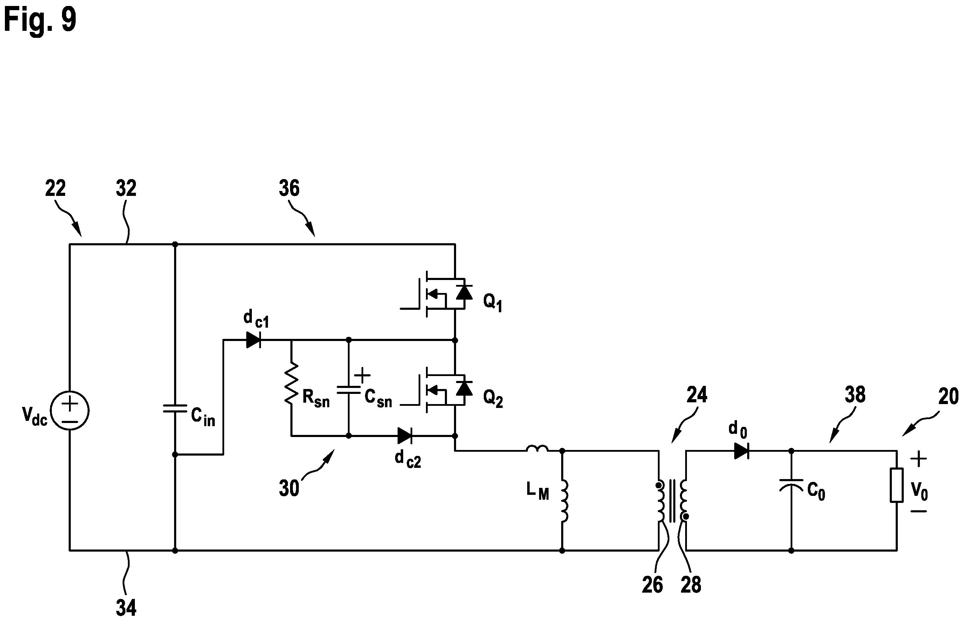

In Fig. 9, the first semiconductor switch Q₁ and the second semiconductor switch Q₂ and the primary side 26 of the transformer 24 are connected in this order between the positive side 32 and the negative side 34 of the DC link connection 22. The first diode d_{c1} interconnects a lower leg of the first semiconductor switch Q₁ with the negative side 34 of the DC link connection 22. As in all embodiments, the snubber circuit 30 interconnects one leg of the second semiconductor switch Q₂ with another leg of the second semiconductor switch Q₂.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: photovoltaic system
- 12: photovoltaic panel
- 14: DC link
- 16: DC link capacitor
- 18: power converter
- V_{dc}: DC voltage
- V_{ac}: AC voltage
- 20: electrical converter
- 22: DC link connection
- 24: transformer
- 26: primary side of transformer
- 28: secondary side of transformer
- Q₁: first semiconductor switch
- Q₂: second semiconductor switch
- L_{M}: inductance of the primary side of the transformer
- L_{lkg}: leakage inductance
- Cᵢₙ: DC link capacitor
- d_{c1}: first diode
- d_{c2}: second diode
- 30: snubber circuit
- 32: positive side
- 34: negative side
- Cₛₙ: snubber capacitor
- Rₛₙ: snubber resistor
- 36: primary side of electrical converter
- 38: secondary side of electrical converter
- C₀: secondary side DC link capacitor
- R₀: load resistance
- V₀: DC output voltage
- I_{lkg}: primary side current
- I_{Q}: the switch current
- I_{LM}: transformer primary side current
- I₀: transformer secondary side current
- 40: secondary side converter
- d₀₁: diode
- d₀₂: diode
- 42: first winding part
- 44: second winding part
- S1: switch
- S2: switch
- S3: switch
- S4: switch
- V_{ac}: AC output voltage
- 46: first half-bridge
- 48: second half-bridge
- 50: circuit board system
- 52: single-switch flyback converter
- 54: first slot
- 56: second slot
- 58: third slot

## Claims

1. An electrical converter (20), comprising:
a transformer (24) with a primary side (26) and a secondary side (28);
a DC link connection (22);
a first semiconductor switch (Q₁) and a second semiconductor switch (Q₂), which are connected in series with the primary side (26) of the transformer (24), which series connection is connected in parallel with the DC link connection (22);
a first diode (d_{c1}) connected in series with the first semiconductor switch (Q₁) and connected to the DC link connection (22), such that the first diode (d_{c1}) and the first semiconductor switch (Q₁) are connected in parallel with the DC link connection (22);
a snubber circuit (30) with a snubber capacitor (Cₛₙ) connected in parallel to the second semiconductor switch (Q₂), which snubber circuit (30) comprises a second diode (d_{c2}) connected in series with the snubber capacitor (Cₛₙ).

2. The electrical converter (20) of claim 1,
wherein the primary side (26) of the transformer (24) is connected between the first semiconductor switch (Q₁) and the second semiconductor switch (Q₂).

3. The electrical converter (20) of claim 1,
wherein the first semiconductor switch (Q₁) and the second semiconductor switch (Q₂) are directly connected; and/or
wherein the primary side (26) of the transformer (24) is connected to a positive side (32) of the DC link connection (22) or to a negative side (34) of the DC link connection (22).

4. The electrical converter (20) of one of the previous claims,
wherein the first semiconductor switch (Q₁) is connected to the positive side (32) of the DC link connection (22); and/or
wherein the second semiconductor switch (Q₂) is connected to the negative side (34) of the DC link connection (22).

5. The electrical converter (20) of one of the previous claims,
wherein the snubber circuit (30) comprises a snubber resistor (Rₛₙ) connected in parallel with the snubber capacitor (Cₛₙ).

6. The electrical converter (20) of one of the previous claims,
wherein the first diode (d_{c1}) is connected in anti-series with the first semiconductor switch (Q₁).

7. The electrical converter (20) of one of the previous claims,
wherein the second diode (d_{c2}) is connected in parallel with the second semiconductor switch (Q₂).

8. The electrical converter (20) of one of the previous claims,
wherein the second diode (d_{c2}) is connected to the primary side (26) of the transformer (24); and/or
wherein the second diode (d_{c2}) is connected between the first semiconductor switch (Q₁) and the second semiconductor switch (Q₂).

9. The electrical converter (20) of one of the previous claims,
wherein the first semiconductor switch (Q₁) has a higher voltage rating as the second semiconductor switch (Q₂).

10. The electrical converter (20) of one of the previous claims,
wherein the first semiconductor switch (Q₁) comprises a SiC semiconductor switch; and/or
wherein the second semiconductor switch (Q₂) comprises a Si semiconductor switch.

11. The electrical converter (20) of one of the previous claims,
wherein the first and/or second semiconductor switch (Q₁, Q₂) comprises an anti-parallel free-wheeling diode; and/or
wherein the DC link connection (22) comprises a DC link connection capacitor (Cᵢₙ).

12. The electrical converter (20) of one of the previous claims,
wherein the secondary side (28) of the transformer (24) is connected in parallel with a second DC link capacitor (C₀); and/or
wherein the secondary side (28) of the transformer (24) is connected in series with a diode (d₀).

13. The electrical converter (20) of one of the previous claims,
wherein the secondary side (28) of the transformer (24) is connected with a secondary side converter (40) adapted for generating an AC output voltage.

14. The electrical converter of claim 13,
wherein the secondary side converter (40) comprises two half-bridges (46, 48) connected in parallel with the secondary side (28) of the transformer (24); or
wherein the secondary side (28) of the transformer (24) comprises two secondary side windings (42, 44), each of which is connected via a respective semiconductor switch (S1, S2) of the secondary side converter (40) in parallel with each other.

15. Circuit board system (50), comprising:
a plurality of equally designed circuit boards, each circuit board comprising a transformer (24), a DC link connection (22), a first semiconductor switch (Q₁), a first diode (d_{c1}) and a snubber circuit (30),
wherein first circuit boards are provided with a second semiconductor switch (Q₂) and a second diode (d_{c2}), such that an electrical converter (20) according to one of the previous claims is formed;
wherein in second circuit boards, a midpoint between the first semiconductor switch (Q₁) and the transformer (24) is interconnected via the snubber circuit (30) to the DC link connection (22), to form a single switch converter (52).
